(19) Europäisches Patentamt
European Patent Office
Office européen des brevets

(11) EP 3 097 540 B1

(12) **EUROPEAN PATENT SPECIFICATION**

(45) Date of publication and mention
of the grant of the patent:
**11.07.2018 Bulletin 2018/28**

(21) Application number: **15708891.5**

(22) Date of filing: **22.01.2015**

(51) Int Cl.:
***G06T 11/00*** (2006.01)

(86) International application number:
**PCT/IL2015/050076**

(87) International publication number:
**WO 2015/111052 (30.07.2015 Gazette 2015/30)**

(54) **METHOD OF REPEAT COMPUTED TOMOGRAPHY SCANNING AND SYSTEM THEREOF**

VERFAHREN ZUR WIEDERHOLUNG EINER COMPUTERTOMOGRAFISCHEN ABTASTUNG UND SYSTEM DAFÜR

PROCÉDÉ DE BALAYAGE RÉPÉTÉ POUR TOMOGRAPHIE PAR ORDINATEUR, ET SYSTÈME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2014 US 201461930564 P**
**02.04.2014 US 201461973998 P**

(43) Date of publication of application:
**30.11.2016 Bulletin 2016/48**

(73) Proprietor: **Yissum Research Development Company of The**
**Hebrew University of Jerusalem Ltd.**
**9139002 Jerusalem (IL)**

(72) Inventors:
• **JOSKOWICZ, Leo**
**9630623 Jerusalem (IL)**
• **MEDAN, Guy**
**9262209 Jerusalem (IL)**
• **KRONMAN, Achia**
**3701211 Pardes Hana (IL)**

(74) Representative: **Conroy, John**
**Fish & Richardson P.C.**
**Highlight Business Towers**
**Mies-van-der-Rohe-Straße 8**
**80807 München (DE)**

(56) References cited:
**EP-A2- 0 989 521     EP-A2- 1 530 162**

• **SAJID ABBAS ET AL: "Low dose CT technique using prior image knowledge", NUCLEAR SCIENCE SYMPOSIUM AND MEDICAL IMAGING CONFERENCE (NSS/MIC), 2011 IEEE, IEEE, 23 October 2011 (2011-10-23), pages 2476-2478, XP032121183, DOI: 10.1109/NSSMIC.2011.6152671 ISBN: 978-1-4673-0118-3**

## Description

### TECHNICAL FIELD

The presently disclosed subject matter relates to volume reconstruction in medical imaging and, more particularly, to methods and systems of interactive volume reconstruction in computer tomography scanning.

### BACKGROUND OF THE INVENTION

The article "Low dose CT technique using prior image knowledge" by Sajid Abbas et al., in Nuclear Science Symposium and Medical Imaging Conference (NSS/MIC), 2011, IEEE of 23 October 2011, ISBN 978-1-4673-0118-3, relates to two methods that are said to reduce imaging radiation dose in CT imaging by use of the prior image knowledge.

Computed Tomography (CT) is nowadays widely available and pervasive in routine clinical practice. Computed tomography (CT) imaging produces a 3D map of the scanned object, where the different materials are distinguished by their X-ray attenuation properties. In medicine, such a map has a great diagnostic value, making the CT scan one of the most frequent non-invasive exploration procedures practiced in almost every hospital. The number of CT scans acquired worldwide is now in the tens of millions per year and is growing at a fast pace. CT studies play a central role in all aspects of patient care, from the diagnosis of a patient's condition, through preoperative intervention planning, intra-procedure execution, and post-procedure evaluation.

A CT image is produced by exposing the patient to many X-rays with energy that is sufficient to penetrate the anatomic structures of the body. The attenuation of biological tissues is measured by comparing the intensity of the X-rays entering and leaving the body. It is now believed that ionizing radiation above a certain threshold may be harmful to the patient. The reduction of radiation dose of CT scans is nowadays an important clinical and technical issue. In CT imaging, the basic trade-off is between radiation dose and image quality. Lower doses, achieved by fewer rays with lower energies, produce imaging artifacts and increased noise, thereby reducing the image quality and limiting its clinical usefulness.

Problems of radiation dose reduction whilst retaining a clinical usefulness of the obtained images have been recognized in the conventional art and various techniques have been developed to provide solutions, for example techniques for dose reduction for individual CT scans and techniques for repeat CT scanning.

Individual CT scanning methods assume that CT scan is stand-alone and independent of previously acquired scans of the same patient. A wide variety of methods for individual CT scanning dose reduction include hardware-based techniques (e.g. high-sensitivity sensors, focused X-ray beams, aperture beam masking, etc.); optimized scanning protocols (e.g. sequential scanning, automatic exposure control, etc.); patient-specific tube current modulation; fast image reconstruction, etc.

In repeat CT scanning, a patient is scanned some time after a baseline scan has been acquired. Repeat CT scanning methods include multi-phase scanning in which repeated scanning is performed before and after contrast, agent injection; follow-up scanning in which repeated scanning is performed for disease progression evaluation (e.g. in oncology); intra-procedural scanning in which repeated scanning is performed during an intervention to update the location of tools and catheters and to determine anatomical changes; post-procedural scanning in which repeated scanning is performed to evaluate the procedure results vis-à-vis a pre/intra-procedural scan; registration scanning in which repeated scanning is performed at the beginning and/or at the end of an intervention to align the pre-procedural scan with the patient; ECG-gated heart scanning in which repeated scanning is performed to compensate for heart motion; etc.

The references cited below teach background information that may be applicable to the presently disclosed subject matter. Therefore the full contents of these publications are incorporated by reference herein where appropriate for appropriate teachings of additional or alternative details, features and/or technical background:

- MK Kalra, MM Maher, TL Toth, LM Hamberg, MA Blake, JA Shepard, S Saini. Strategies for CT radiation dose optimization. Radiology 230(3):620-628, 2004;
- J Shtok, M Elad, and M Zibulevsky. Learned shrinkage approach for low-dose reconstruction in computed tomography. Int. Journal of Biomedical Imaging, 2013:1-20, 2013;
- JW Moore, HH Barrett, and LR Furenlid, Adaptive CT for high-resolution, controlled-dose, region-of-interest imaging. Proc. IEEE Nuclear Science Symposium, pp 4154-4157, 2009;
- W Xu and K Mueller. Efficient low-dose CT artifact mitigation using an artifact-matched prior scan. Medical Physics 39: 47-48, 2012;
- W Mao, T Li, N Wink, L Xing. CT image registration in sinogram space. Medical Physics 34: 35-96, 2007;
- Backprojection reconstruction method for CT imaging. AL Alexander et al. US Patent Application No. 2007/009080;
- Projection data recovery-guided nonlocal mean low-dose CT reconstruction method. J Ma et al. CN Patent Application No. 101980302;
- Non-partial regularization prior reconstruction method for low-dosage X-ray captive test CT image. H Zhang et al. CN Patent Application No. 102737392;
- Method for reconstructing low-dose CT images based on redundant information of standard dose images. H Zhang et al. CN102063728;
- Fast three-dimensional visualization of object volumes without image reconstruction by direct display of acquired sensor data. Kalvin A. US Patent Application No. 2009/219289.

## GENERAL DESCRIPTION

In many cases of repeat scanning, the changes are confined to a few small regions of the image, while the remaining regions remain essentially the same. As most of the image information in the repeat scan is closely correlated to that of the baseline scan, there is no need to acquire it again: only the regions where changes occurred need to be re-scanned with full dose. The repeat scan dose can be significantly reduced by scanning only such regions of interest. In accordance with certain aspects of the presently disclosed subject matter, the radiation dose can be reduced without image quality loss using the baseline scan information during reduced-dose repeat scanning.

In accordance with certain aspects of the presently disclosed subject matter, there is provided a method of computer tomography (CT) volume reconstruction based on a baseline sinogram obtained by a prior scanning an object in $B$ directions. The method comprises: a) obtaining initial partial sinogram by initial repeat scanning the object in $b$ directions out of $B$ directions, $b$ being substantially less than $B$; b) comparing the baseline sinogram and the initial partial sinogram to assess, for each voxel associated with the object, a likelihood of change; c) using the assessed likelihood of change for generating configuration data informative, at least, of rays to be cast in a further repeat scan in an un-scanned direction; d) performing a repeat scan in the un-scanned direction in accordance with the generated configuration data, thereby obtaining partial sinogram, and using the partial sinogram for updating the assessed likelihood of change; e) repeating operations c) and d) until all directions have been scanned to yield respective partial sinograms; f) composing the baseline and all partial sinograms into a composed sinogram; and g) processing the composed sinograms into an image of the object. The method can further comprise aligning, prior to operation b), the baseline sinogram and the initial partial sinogram. The number of rays cast when scanning in a given un-scanned direction can substantially lower than the number of rays casted when obtaining the baseline sinogram.

In accordance with other aspects of the presently disclosed subject matter, there is provided a system of repeat CT scanning configured to operate in accordance with the disclosed method of CT volume reconstruction.

In accordance with other aspects of the presently disclosed subject matter, there is provided a simulator of repeat CT scanning configured to simulate the disclosed method of CT volume reconstruction.

In accordance with other aspects of the presently disclosed subject matter, there is provided a computer-based volume reconstruction unit configured to operate in conjunction with a CT scanner and to provide volume reconstruction based on a baseline sinogram obtained by a prior scanning an object in $B$ directions. The unit further configured: a) to obtain initial partial sinogram resulting from initial repeat scanning the object by the CT scanner in $b$ directions out of $B$ directions, $b$ being substantially less than $B$; b) to compare the baseline sinogram and the initial partial sinogram and to assess, for each voxel associated with the object, a likelihood of change; c) to generate, using the assessed likelihood of change, configuration data informative, at least, of rays to be cast in a further repeat scan in an un-scanned direction; d) to enable repeat scan in the un-scanned direction in accordance with the generated configuration data and to obtain respective partial sinogram; e) to update the assessed likelihood of change using the partial sinogram; f) to repeat operations c) - e) until all directions have been scanned to yield respective partial sinograms; g) to compose the baseline and all partial sinograms into a composed sinogram; and h) to process the composed sinograms into an image of the object. The unit can be further configured to align, prior to operation b), the baseline sinogram and the initial partial sinogram.

In accordance with other aspects of the presently disclosed subject matter, there is provided a system of repeat CT scanning comprising the volume reconstruction unit disclosed above.

In accordance with further aspects and, optionally, in combination with other aspects of the presently disclosed subject matter, aligning can be provided by rigid registration in three dimensional (3D) Radon space. The number $b$ of directions in the initial repeat scanning is selected so as to enable sufficient information for aligning the baseline sinogram and the initial partial sinogram.

In accordance with further aspects and, optionally, in combination with other aspects of the presently disclosed subject matter, the number $b$ of directions in the initial repeat scanning can be selected so as to enable sufficient information for assessing likelihood of change for the voxels.

In accordance with further aspects and, optionally, in combination with other aspects of the presently disclosed subject matter, assessing the likelihood can comprise estimating, for each cast ray, probability that the ray has passed through a region constituted by changed voxels. The probability can be estimated using a noise difference model and/or rays difference model and can be further weighted in accordance with a risk-taking management policy. The assessed likelihood of change of corresponding voxels can be presented by a "change likelihood" map generated and updated, following each repeat scanning, by the volume reconstruction unit.

The embodiments are suitable for various CT scanners and scan protocols. Examples of clinical applications of the disclosed technique include multiphase scanning for traumatic head injury management, infra-procedural tumor resection in the CT suite, and follow-up scanning for treatment response evaluation in oncology, among many others. The disclosed technique can directly benefit patients that require multiple scans of the same body region and/or that are periodically evaluated with CT scans.

Among advantages of certain embodiments of the presently disclosed subject matter is capability of performing adaptive optimization of the radiation of the repeat CT scan based on changes that have occurred since the base scan was acquired without loss of image quality.

## BRIEF DESCRIPTION OF THE DRAWINGS

In order to understand the invention and to see how it can be carried out in practice, embodiments will be described, by way of non-limiting examples, with reference to the accompanying drawings, in which:

Fig. 1 illustrates a functional block diagram of a CT scanning system in accordance with certain embodiments of the presently disclosed subject matter;

Fig. 2 illustrates a non-limiting schematic example of Radon transform as known in the art;

Fig. 3 illustrates a generalized flow-chart of volume reconstruction using repeat scanning in accordance with certain embodiments of the presently disclosed subject matter;

Fig. 4 illustrates non-limiting examples of test results of volume reconstruction provided for Shepp-Logan head phantom in accordance with certain embodiments of the presently disclosed subject matter;

Fig. 5 illustrates non-limiting examples of test results of volume reconstruction provided for a pair of clinical head CT scans in accordance with certain embodiments of the presently disclosed subject matter;

Fig. 6 illustrates a generalized flow-chart of registering a baseline sinogram in accordance with certain embodiments of the presently disclosed subject matter;

Fig. 7 schematically illustrates matching procedure of 3D Radon transforms in accordance with certain embodiments of the presently disclosed subject matter; and

Fig. 8 illustrates non-limiting examples of test results of registration provided for a pair of clinical head CT scans in accordance with certain embodiments of the presently disclosed subject matter.

## DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "computing", "representing", "comparing", "generating", "assessing", "matching", "updating" or the like, refer to the action(s) and/or process(es) of a computer that manipulate and/or transform data into other data, said data represented as physical, such as electronic, quantities and/or said data representing the physical objects. The term "computer" should be expansively construed to cover any kind of electronic device with data processing capabilities including, by way of non-limiting example, volume reconstruction unit disclosed in the present application.

It is to be understood that the term "non-transitory memory" is used herein to exclude transitory, propagating signals, but to include, otherwise, any volatile or nonvolatile computer memory technology suitable to the presently disclosed subject matter.

It is also to be understood that the term "signal" used herein excludes transitory propagating signals, but includes any other signal suitable to the presently disclosed subject matter.

The terms "volume reconstruction" used in this patent specification should be expansively construed to cover any kind of image-processing used to facilitate displaying three-dimensional (3D) data indicative of 3D physical objects on a two-dimensional (2D) image surface.

The operations in accordance with the teachings herein may be performed by a computer specially constructed for the desired purposes or by a general-purpose computer specially configured for the desired purpose by a computer program stored in a computer readable storage medium.

Embodiments of the presently disclosed subject matter are not described with reference to any particular programming language. It will be appreciated that a variety of programming languages may be used to implement the teachings of the presently disclosed subject matter as described herein.

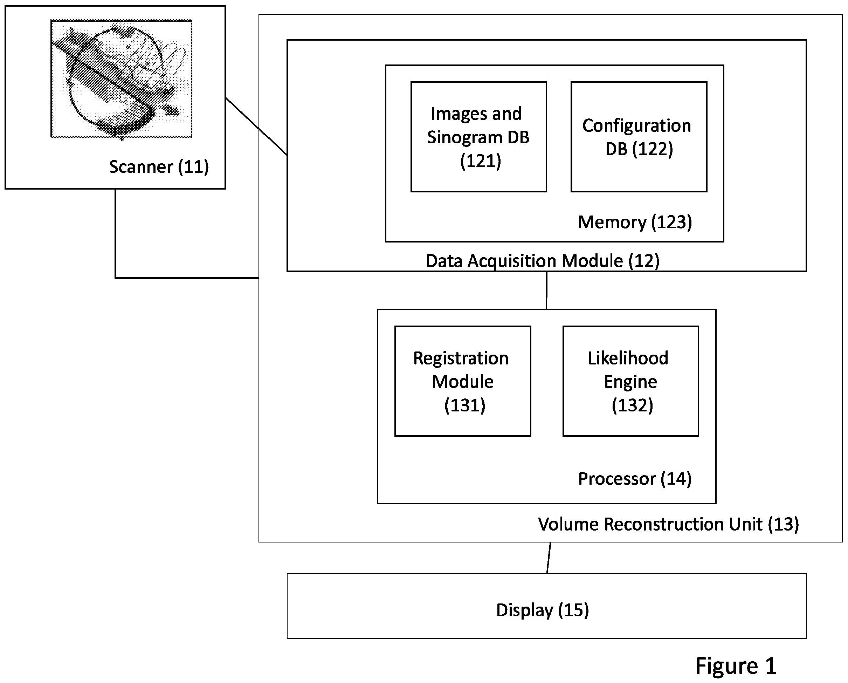

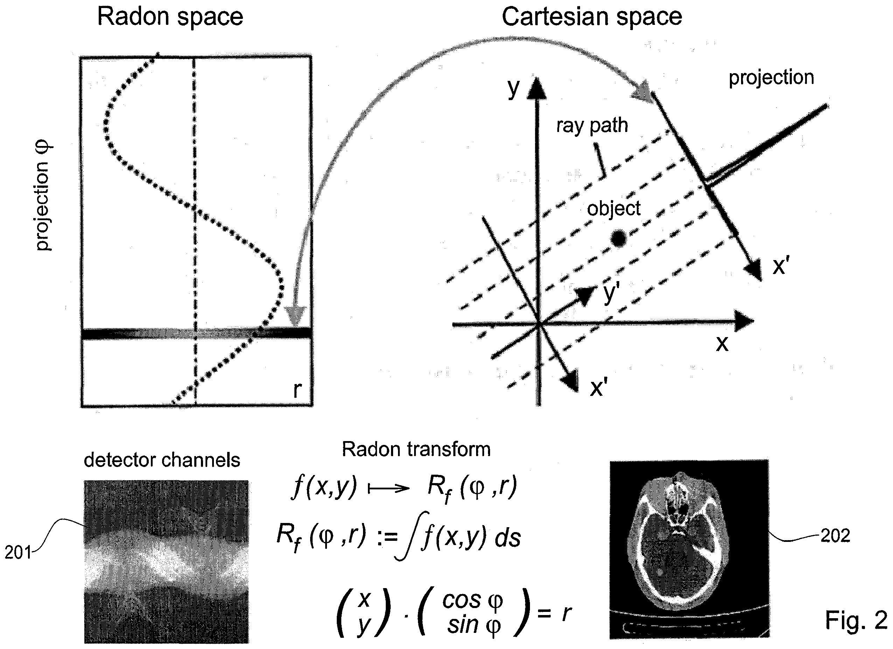

Bearing this in mind, attention is drawn to **Fig. 1** illustrating a functional diagram of a CT repeat scanning system with volume reconstruction capabilities in accordance with certain embodiments of the currently presented subject matter. CT volume reconstruction comprises obtaining an image from a set of projection measurements that can be described by a Radon transform. The Radon transform provides a mathematical basis for obtaining images from measured projection data. The Radon transform representation is referred to hereinafter as a "sinogram". 2D Radon transform can be represented by 2D sinograms while 3D Radon transform can be represented by 3D sinograms. A non-limiting schematic example of 2D sinogram **201** representing an object in Radon space and image (slice) **202** representing the object in image space is illustrated in **Fig. 2**.

The illustrated CT scanning system comprises a CT scanner **(11)** configured to provide selective repeat scanning and operatively coupled to a volume reconstruction unit **(13)**. The volume reconstruction unit **(13)** comprises a data acquisition module **(12)** configured to acquire data indicative of 3D projective measurements by the scanner and to generate corresponding sinograms. Optionally, the data acquisition module can receive sinograms from the CT scanner **(11)**. The generated sinograms (e.g. a baseline sinogram, partial sinograms from repeat scans, etc.) can be stored in a memory **123** comprising an image and sinogram database **121**. The database **121** can further accommodate baseline and repeat images if obtained by the data acquisition module. The memory **123** can be further configured to accommodate a configuration database **122** storing data informative of scan parameters and reconstruction models usable during the volume reconstruction.

The volume reconstruction unit **(13)** further comprises a processor **(14)** operatively coupled to the data acquisition module **(12)** and configured to receive the sinograms from the data acquisition module **(12),** and to process the received data in accordance with teachings of the presently disclosed subject matter. As will be further detailed with reference to **Figs. 2-8,** the processor can comprise a registration module **(131)** configured to provide registration of the baseline scan to the patient by aligning the full baseline sinogram to the partial sinogram obtained by fractional scanning. The processor can further comprise a likelihood engine **(132)** configured to provide iterative probabilistic estimation and update of the likelihood of change of each voxel in the repeat scan, thereby enabling identification of a region of interest (RoI) where the changes are likely to have occurred. The likelihood engine **(132)** is further configured to generate parameter data informative of parameters of further selective fractional repeat scans (ray angles and respective energy levels) needed to acquire additional data on certain voxels; and the CT scanner is configured to receive the generated parameter data (and/or derivatives thereof) from the volume reconstruction unit, and to provide selective fractional scanning accordingly. The processor **(14)** is further configured to compose the baseline and the partial sinograms into a resulting sinogram and to process the resulting sinogram to obtain a repeat scan image. The resulted repeat scan image is transferred for rendering at a display **(15)** coupled to the volume reconstruction unit.

It is noted that the teachings of the presently disclosed subject matter are not bound by the specific CT scanning system described with reference to **Fig. 1**. Equivalent and/or modified functionality can be consolidated or divided in another manner and can be implemented in any appropriate combination of software, firmware and hardware. The volume reconstruction unit can be implemented as a suitably programmed computer.

For purpose of illustration only, the following description is provided for a parallel-beam scanning. Those skilled in the art will readily appreciate that the teachings of the presently disclosed subject matter are, likewise, applicable to fan-beam and cone-beam CT scanning.

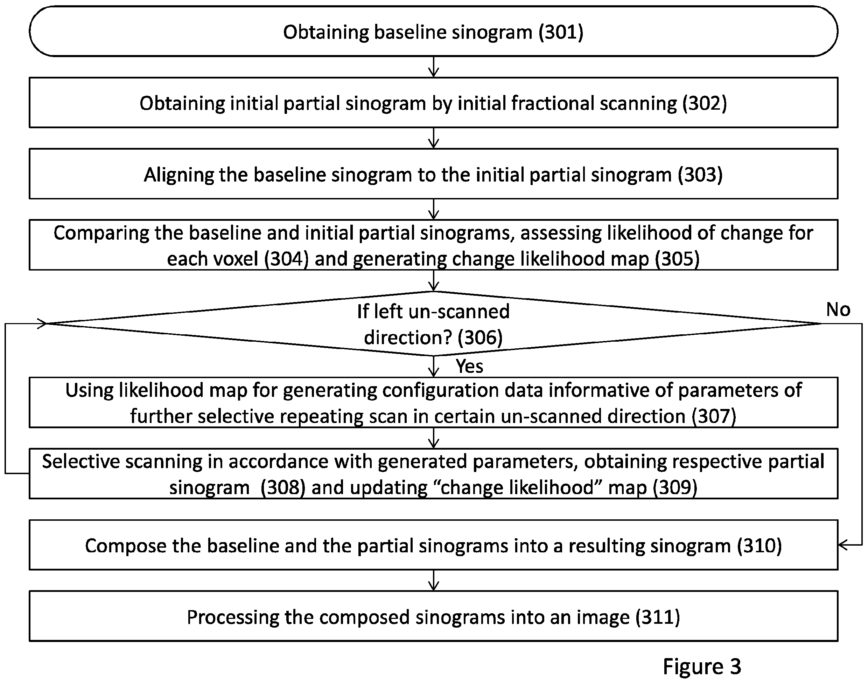

Referring to **Fig. 3,** there is illustrated a generalized flow chart of volume reconstruction using iterative repeat CT scanning.

A baseline sinogram is obtained by scanning $a$ rays for each of $B$ directions used in each of $c$ slices for a baseline scan (full-dose scan). In accordance with certain embodiments of the presently disclosed subject matter, upon obtaining **(301)** the baseline sinogram, the repeat scanning starts from a fractional repeat scanning provided for a fraction of $b$ directions among $B$ directions used for the baseline scan and obtaining **(302)** an initial partial sinogram. The value of $b$ and the spatial distribution of the $b$ directions shall be selected to enable acquiring sufficient information for aligning the baseline sinogram to the initial partial sinogram and, thereby, registering the baseline scan to a patient with repeat scanning, as well as for initial estimation of voxel change likelihood map. By way of non-limiting example, the fractional scanning can consist of scanning all $a$ rays from a subset of $b$ equally spaced directions out of a total of $N$ directions for a baseline scan in a significant part of the $c$ slices (optionally, in each of $c$ slices). Typically, $b$ = 3-20 directions out of $B$

= 180°/(angular scan resolution) that are typically used in a baseline. Predefined values characterizing the fractional scanning can be stored in the configuration database **(122)**. Optionally, the number *b* can be selected in accordance with expected changes between the baseline scan and the repeat scan, with *b* increasing for higher expected changes.

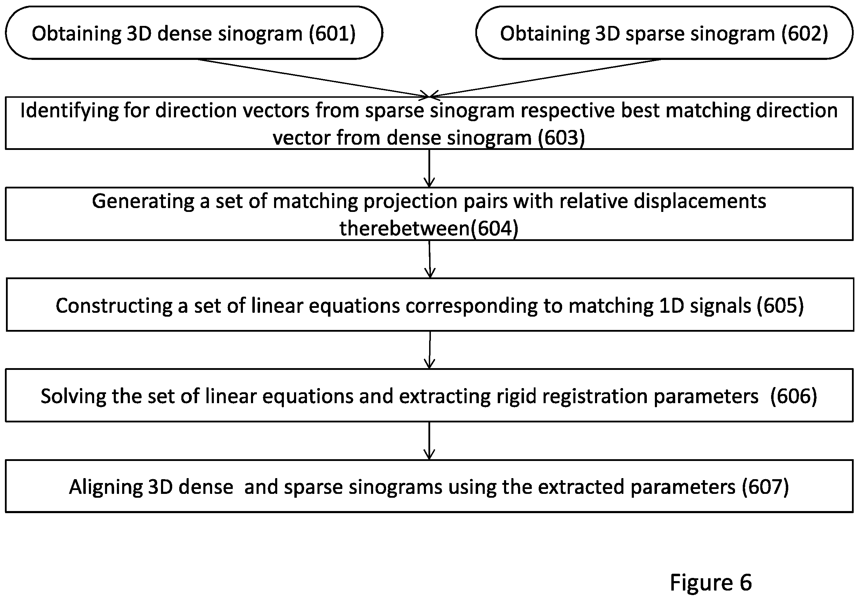

Upon obtaining the initial partial sinogram, the volume reconstruction unit aligns **(303)** the baseline sinogram to the initial partial sinogram, thereby providing rigid registration of the baseline sinogram to a patient with repeat scanning. The registration of the baseline sinogram can be provided by the registration module **131** by any appropriate method of registration of sinogram in 3D Radon space, some of such methods are known in the art. In accordance with certain embodiments of the presently disclosed subject matter, the registration can be provided by the method further detailed with reference to **Figs. 6 - 8.**

The volume reconstruction unit (e.g. the likelihood engine **132**) further compares the registered baseline sinogram and the initial partial sinogram, and assesses **(304)** likelihood of change for each voxel represented by the sinograms. Assessing the likelihood can include computing, for each scanned ray, the difference of the 1D intensity signal between the baseline sinogram and the initial partial sinogram and using a noise difference model and rays difference model to estimate the probability that the ray passed through a region that has changed (i.e. a region constituted by changed voxels).

The rays difference model characterizes a probability of two rays, having passed in the same trajectory through a changed region in the object, to have a given difference in their 1D intensity signal. The rays difference model can be an empirical model, can be based on a conservative Gaussian distribution of the rays' difference, can be obtained from prior information (e.g. the density of the suspected changed anatomy and its size), etc. The rays difference model can be stored in the configuration database **122**.

The noise model characterizes the probability of two rays having passed in the same trajectory through the same object, to have a given difference in their ID intensity signal. The noise model can be obtained by repeat scanning of various phantoms in the CT scanner, and estimating the signal difference distribution for the same rays across scans. The noise model can be stored in the configuration database **122.**

Upon assessing the likelihood of change for each voxel represented by the baseline and the initial partial sinograms, the volume reconstruction unit generates **(305)** an initial changes likelihood map.

The changes likelihood map (referred to hereinafter also as "likelihood map") is indicative of the likelihood of a change in the anatomy between the two scans, and associates each voxel with a respective value indicative of how likely it is that its intensity changed since the baseline scan. As will be further detailed with reference to operations **(306)** - **(308),** the likelihood map is updated during repeat scanning after each acquisition of a new 1D intensity signal in a respective direction.

Upon providing the initial fractional scanning and obtaining the initial partial sinogram, there are (*B* - *b*) directions left un-scanned. Not scanning a changed region may cause image quality degradation and obscuring actual changes in the anatomy, whilst scanning an unchanged region bears an extra radiation cost.

In accordance with certain embodiments of the presently disclosed subject matter, the CT system is configured to enable dose reduction for repeat scans by incremental selective reduction of the number of used rays. The volume reconstruction unit checks **(306)** if an un-scanned direction has been left; and incrementally decides, for each un-scanned direction, which rays are necessary in the respective repeat scan. The volume reconstruction unit uses the "change likelihood" map for generating **(307)** configuration data informative of parameters (e.g. selected rays to be casted and intensity thereof) of an upcoming repeat scan to be provided in a certain un-scanned direction.

For each ray, the volume reconstruction unit derives from the most updated likelihood map a probability that the ray has passed through a changed region (e.g. taking the maximum over the ray's path, computing the complement of the probability that no voxel in the path has changed, etc.), and generates configuration data accordingly.

The volume reconstruction unit can further weight the calculated probabilities in accordance with a risk-taking management policy. The policy specifies at least two user-defined parameters: a parameter representing the radiation cost of scanning a ray having passed through an unchanged region, and a parameter representing the cost of not scanning a ray through a changed region. These two opposing parameters can be used to weight the calculated probabilities of changed/unchanged, and the binary decision of whether or not to cast the ray can be taken by comparing the weighted probabilities with a cylindrical safety margin around the current ray. For the rays deemed as necessary, the volume reconstruction unit also computes respective minimum required energy in the baseline scan and a dose safety margin based on the expected difference model.

For each selective scanning provided in accordance with the generated parameters, the data acquisition module obtains **(308)** respective partial sinograms. The volume reconstruction unit updates **(309)** the "change likelihood" map after each acquisition of a new 1D intensity signal in a given direction. The likelihood map can be accommodated in a memory (not shown) accessible to the likelihood engine **(132).**

Updating the likelihood map can comprise:

- for each scanned ray, computing the difference of the 1D intensity signal between a current scan and a previous scan;

- using the calculated difference and, optionally, the noise and rays difference models for estimating the probability that the ray passed through a region that has changed;
- back-projecting the estimated probability into the likelihood map, thus updating it with the new data. By way of non-limiting example, the likelihood map can be updated using the Bayesian technique that establishes rules on how to combine conditional probabilities.

The volume reconstruction unit repeats operations **306-309** until all directions have been scanned. Optionally, several directions can be combined into a single scan. In such cases, the respective rays to be cast are selected separately for each of the combined directions.

The volume reconstruction unit composes **(310)** a resulting sinogram from the acquired partial repeat scan sinograms and the baseline scan sinogram. Data from scanned rays are incorporated with data from the baseline scan. Rays that have not been scanned are assumed to have passed through unchanged regions of the object, and therefore their projection value can be taken from the aligned baseline scan.

The volume reconstruction unit further uses the resulting sinogram to perform **(311)** image reconstruction using any of appropriate standard methods or otherwise.

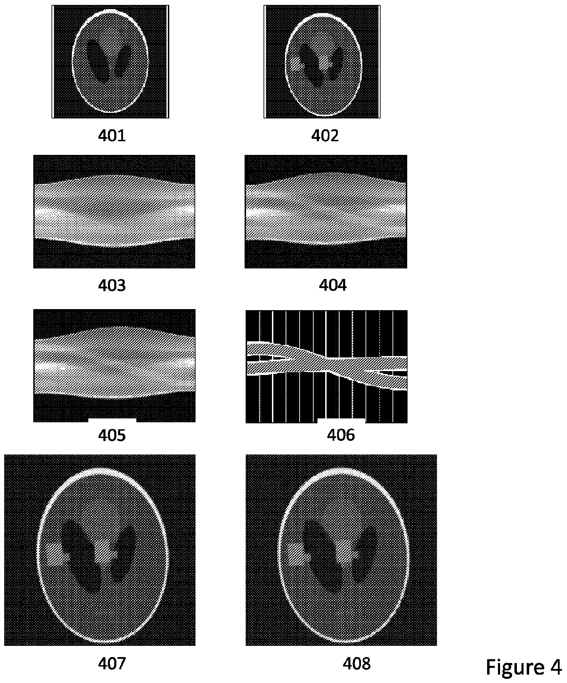

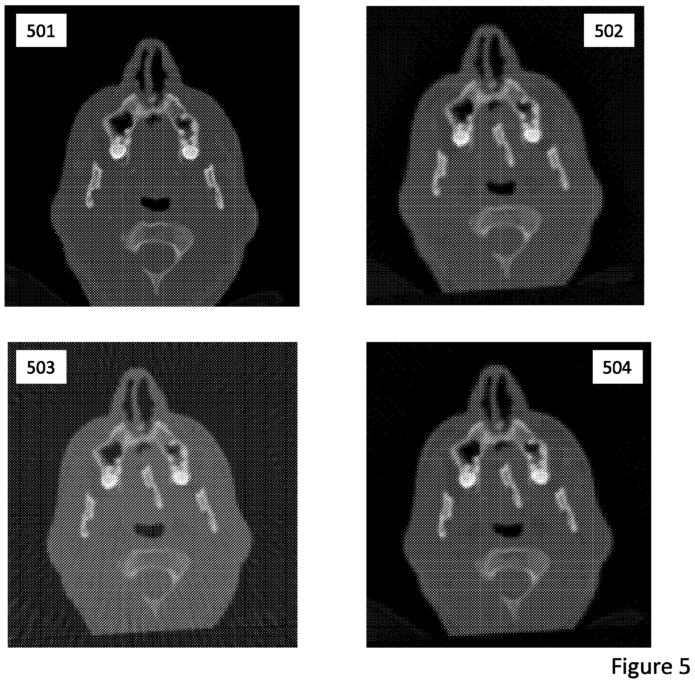

**Figs. 4** and **5** illustrate non-limiting examples of simulation results provided in accordance with certain embodiments of the presently disclosed subject matter. The simulations have been provided for a Shepp-Logan head phantom **(Fig. 4)** and to a pair of clinical head CT scans **(Fig. 5).** In both cases, the full baseline and repeat scan sinograms have been generated by simulating parallel-beam scanning of one slice in 2D Radon space. To account for sensor noise, Gaussian noise was added in Radon space for simulations provided for the Shepp-Logan phantom. For clinical datasets, the noise was assumed to be inherent in the data and therefore no additional noise was introduced in these datasets. The simulation assumes full, unrestricted access to the baseline sinogram, and restricted access to the repeat scan sinogram. Iterative selective scanning in accordance with embodiments of the presently disclosed subject matter is simulated by retrieving the corresponding intensity signals from the repeat scan sinogram. Each voxel on the baseline image is associated with an estimated radiation dose incurred by the number of simulated rays passing through them.

The dose reduction is calculated as the relative amount of rays passing through each voxel from the total amount of rays that the voxel would have been subjected to in a full scan times the relative ray energy averaged across all object voxels. The resulting reconstructed image quality can be quantified by root-mean-square (RMS) difference from a full scan reconstruction of the object and by the RMS difference from the ground truth, compared to the RMS difference from the object achieved by a regular full scan.

The Shepp-Logan baseline scan **(401)** consists of 256x256x256 voxels with intensity values in [0,1]. The repeat scan **(402)** was simulated by artificially adding to the baseline scan four squares and two circles and applying to it a rigid transformation. As illustrated: **(401)** Shepp-Logan phantom (baseline); **(402)** phantom modified with two small changed regions, including 2D rigid transformation (repeat scan); **(403)** full-dose baseline sinogram; **(404)** full-dose repeat scan sinogram; **(405)** composite sinogram obtained by simulation with a 50% dose reduction: **(406)** fired/unfired rays sinogram map (black - not fired; gray - fired rays that go through image regions with changes; white - fired rays that go through image regions without changes); **(407)** image reconstructed from the composite sinogram obtained by simulation with a 50% dose reduction; **(408)** image reconstructed from the original full-dose repeat scan. As illustrated, the full- dose and half-dose simulated sinograms **(404** and **405)** as well as their respective images **(407** and **408)** are, practically, indistinguishable.

Referring to **Fig. 5,** there are illustrated representative CT scan slices of the clinical head CT study: **(501)** full-dose baseline scan; **(502)** full-dose follow-up scan; **(503)** low-dose image reconstruction with 33% of the dose energy; **(504)** low-dose reconstruction in accordance with teachings of the presently disclosed subject matter with 33% of the dose energy (66% dose reduction). The clinical dataset **(501, 502)** consists of two CT scans of a patient from different times, both with voxel size of 0.42x0.42x0.67 mm$^3$. As illustrated, the simulated results **(504)** obtained with 66% dose reduction are, practically, indistinguishable from the full-dose follow-up scan **(502).**

The mathematical formulation of registration, comparing and composing the sinograms can be presented as follows:

Let $f$: $R^k \rightarrow R$ be an image function that maps $k$-dimensional location vectors to intensity values. Let $H(\boldsymbol{n},s)$ be the hyperplane defined by normal direction vector $\boldsymbol{n}$ and distance $s$ from the origin in $k$-dimensional space. The Radon transform $\mathbf{R}$ of image function $f$ is a function $\mathbf{R}f$: $S^{k-1} \times R \rightarrow R$ defined on unit sphere $S^{k-1}$ of normal direction vector $\boldsymbol{n}$ and distance $s$:

$$Rf(\boldsymbol{n}, s) = \int_{H(\boldsymbol{n},s)} f(X)d\mu \qquad (1)$$

where $X$ is an $k$-dimensional vector and $d\mu$ is the standard measure on $H(\boldsymbol{n},s)$.

Let *f*, *g* be two image functions such that *g* is a rigid transformation of *f*:

$$g(X) = f(\rho A_{r,\theta} X + X_0) \qquad (2)$$

where $\rho > 0$ is the scaling constant, $X_0 \in R^k$ is the constant offset vector, and $A_{r,\theta}$ is a unitary *k* x *k* matrix in which rotations are represented by an axis vector *r* and an angle $\theta$ of rotation about *r*.

A well-known relation between the Radon transforms **R***f*, **R***g* of image functions *f*, *g* is:

$$\mathbf{R}g(n,s) = \rho^{n-1} \mathbf{R}f(n', \rho^{-1}(s + n.X_0)) \qquad (3)$$

where *n* and *n'* are normal unit direction vectors satisfying:

$$n' = A_{r,\theta}^{-1} n \qquad (4)$$

This relation can be interpreted as follows. For a given normal unit direction vector *n*, the Radon transforms of *f* and *g*, **R***f*(*n*, *s*) and **R***g*(*n*, *s*) are one-dimensional (1D) intensity signals (the sinograms) of the distance *s*, which is denoted by $F_n(s) = \mathbf{R}f(n,s)$ and $G_n(s) = \mathbf{R}g(n,s)$. Without offset and scaling, i.e. when $X_0 = 0$ and $\rho = 1$, **Eq. 3** reduces to $\mathbf{R}g(n,s) = \mathbf{R}f(n',s)$, which means that the 1D signals $F_n(s)$ and $G_n(s)$ are identical for direction vectors *n* and *n'*. That is, the projection in the direction *n'* before the image *f* is rigidly rotated about the axis **r** is identical to the projection in a different direction *n* after the rotation, where the direction vectors *n* and *n'* are related by the same rotation $A_{r,\theta}$. When the offset $X_0$ is not zero,

$$G_n(s) = F_{n'}(s - n.X_0) \qquad (5)$$

i.e., $F_{n'}(s)$ remains the same and is shifted by $\Delta = n.X_0$ for direction vectors *n* and *n'*.

In physical space, the image functions *f*, *g* corresponding to the baseline and repeat scans are volumetric images; their Radon transform, $\mathbf{R}_{3D}f$ and $\mathbf{R}_{3D}g$ are 3D, and the direction vectors are points on the unit sphere $S^2$. The spatial rigid transformation that relates *f* and *g* can be described by a translational offset $X_0$, a rotation axis vector *r*, and a rotation angle $\theta$ about this axis. The goal of the rigid registration is to find the parameters $(r, \theta, X_0)$ for which **Eq. 2** holds.

In accordance with certain embodiments of the presently disclosed subject matter, the rigid registration is provided in 3D Radon space. It can be presented as a rigid transformation that aligns the baseline image *f* and the repeat image *g*, and can be computed by matching their 3D Radon transforms, $\mathbf{R}_{3D}f$, $\mathbf{R}_{3D}g$, instead of matching the images themselves.

Note that since **Eq. 2** reduces to **Eq. 5** without scaling, $F_{n'j}(s)$ and $G_{ni}(s)$ can be matched, where $n'_j$ and $n_i$ are the direction vectors of the 3D Radon transforms. When these Radon transforms are equal, that is $G_{ni}(s) = F_{n'j}(s - \Delta_i)$ for offset $\Delta_i$ and direction vectors $n'_j$ and $n_i$, can be obtained from **Eqs. 4** and **5**:

$$n'_j = \Delta_i = n_i.X_0 \quad \text{and} \quad n_j' = A_{r,\theta}^{-1} n_i \qquad (6)$$

which is a set of linear equations from which the desired transformation parameters $(r,\theta,X_0)$ are computed by finding at least three pairs of independent direction vectors $n'_j$, $n_i$ that satisfy **Eqs. 6**. Thus, sparse sampling of a few direction vectors of the repeat image *g* suffices to match it to baseline image *f*. The intensity signals of sparsely scanned image g form its partial sinogram.

Once the full baseline and the partial repeat scans have been matched, their sinograms can be compared as follows. The intensity signals of the image regions in which there is no change will be nearly identical, while those in regions where there are changes will be different. The similarity measure between the baseline and repeat scan sinograms is thus a function of the difference of the paired 1D intensity signals in the corresponding sinograms for all direction vectors *n* in 3D Radon space:

$$similarity - measure(\mathbf{R}_{3D}f(n,s), \mathbf{R}_{3D}g(n,s)) \qquad (7)$$

When there is no change and no noise, the paired vectors will all be identical. In general, two identical intensity signals from two different direction vectors need not correspond to the same image regions in *f* and *g*. However, these coincidental matches are unlikely in CT scans of human anatomy, which is complex, rich in detail, and radially asymmetric.

The partial, sparsely sampled repeat scan sinogram $\mathbf{R_{3D}}g$ of *g* can then be completed to a full scan by substituting into it the missing intensity signals from the full baseline scan sinogram $\mathbf{R_{3D}}f$ of *f*.

Referring to **Fig. 6,** there is illustrated a generalized flow chart of registering a baseline sinogram to the patient with repeat reduced-dose scanning in accordance with certain embodiments of the presently disclosed subject matter. It is noted that the registration technique detailed with reference to **Figs. 6 - 8** is applicable for registration of any two CT scans, one densely sampled and the other sparsely sampled. As detailed above, in accordance with certain embodiments, the rigid transformation that aligns images *f* (densely sampled) and *g* (sparsely sampled) can be computed by matching their 3D Radon transforms ($R_{3D}f$ and $R_{3D}g$) instead of matching the images themselves, thereby providing rigid registration in 3D Radon space.

Radon transforms $R_{3D}f$ and $R_{3D}g$ can be received from the CT scanner or can be computed by the data acquisition module from the 2D sinograms of the slices.

Upon obtaining (**601**) corresponding to results of a densely sampled scan 3D dense sinogram (e.g. baseline sinogram) with inputs defined by direction vectors $\{n'_j\}^L_{j=1}$ and obtaining (**602**) corresponding to results of a sparsely sampled scan 3D sparse sinogram (e.g. partial sinogram) with inputs defined by direction vectors $\{n_i\}^K_{i=1}$, the volume reconstruction unit identifies (**603**) for each direction vector from the obtained sparse sinogram respective best matching direction vector from the obtained dense sinogram. Optionally, such identification can be provided for a fraction of the direction vectors of the sparse sinogram and not for all direction vectors. By way of non-limited example, the fraction can consist of at least three equally spaced direction vectors. Increasing the number of direction vectors used for the maching operation can improve robustness and accuracy of the registration. The decision on which direction vectors to take can be based on the likelihood map.

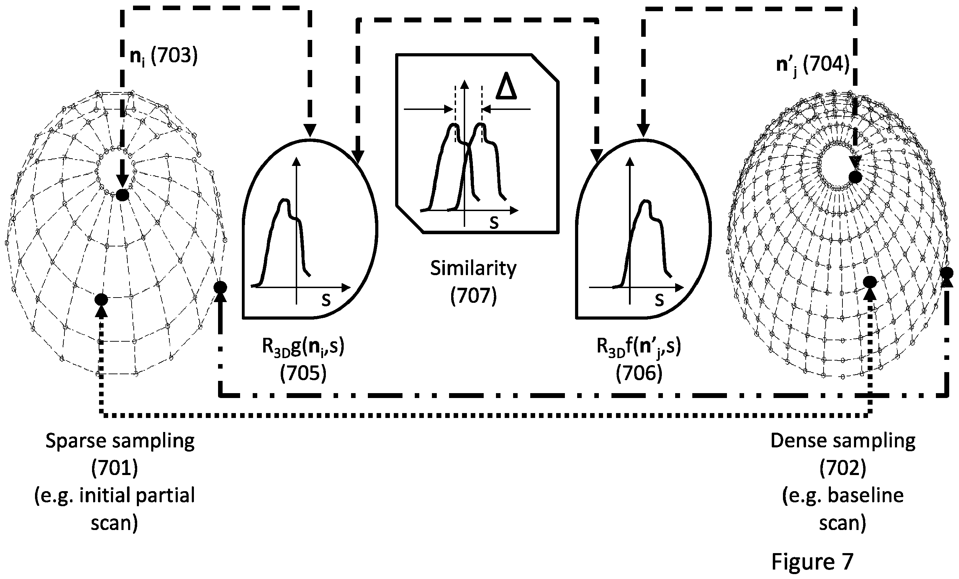

The matching procedure of 3D Radon transforms **701** and **702** is schematically illustrated in **Fig. 7.** Direction vectors **703** and **704** are represented as points on the unit sphere. Each direction vector corresponds to respective 1D projection signal (**705** and **706**) with similarity represented by relative displacement **707**.

Referring back to **Fig. 6,** the similarity of the two 1D signals from two direction vectors can be evaluated as a non-limiting example with Normalized Cross Correlation (NCC); the NCC value is the direction vectors pair score. For each direction vector $n_i$, the volume reconstruction unit can select the direction vector $n'_j$ with the highest NCC score and compute its relative displacement $\Delta i$. The volume reconstruction unit can further define an index function *match(i)* = $argmax_j \{NCC(R_{3D}g(n_i, s), R_{3D}f(n'_j, s)\}$ that pairs the direction vectors. In order to avoid searching all possible direction vectors $n'_j$, the search can be restricted to a neighborhood of $n_i$ defined by $\Phi(n_i) = n'_j \cdot \{cos^{-1}(n_i * n'_j) < \phi\}$, where $\phi$ is the largest expected relative orientation offset between the images.

Thus, for each direction vector $n_i$, the volume reconstruction unit identifies matching direction vector $n'_j$ and relative displacement $\Delta_i$ for which the corresponding 1D intensity signals $G_{ni}$ and $F_{n'j}$ are most similar. As a result, the volume reconstruction unit generates (**604**) a set of matching pairs of projections along with their relative displacements $\{(F_{n'j}, G_{ni}, \Delta_i)\}^K_{i=1}$.

Upon identifying the matching pairs and extracting respective relative displacement $\Delta i$, the volume reconstruction unit constructs (**605**) the set of linear equations obtained by substituting each direction vector pair in **Eqs. (6):**

$$\Delta_i = n_i X_0$$

$$nj' = A_{r,\theta}^{-1} n_i$$

The volume reconstruction unit further solves the constructed set of linear equations and extracts (**606**) rigid registration parameters. Extracting translation parameters can be decoupled from extracting rotation parameters.

Substituting each direction vector pair in **Eqs. (6)** yields an over-determined set of linear equations. The desired rigid transformation parameters ($r, \theta, X_0$) can be computed by least-squares minimization. Offset $X_0$ can be estimated as $\hat{X}_0 = (N^T N)^{-1} N^T \Delta$, where $N = [n_1 \ldots n_K]^T$ and $\Delta = [\Delta_1 \ldots \Delta_K]^T$. This solution minimizes the term $\sum_{i=1}^{K} (\Delta_i - n_i \cdot X_0)^2$.

The rotation matrix $Ar,\theta$, can be defined using the $3 \times 3$ matrix $M = \sum_{i=1}^{K} n'_i n_i^T$, and computing its Singular Value Decomposition (SVD) $M = U^T \Sigma V$. The estimate $\hat{A}_{r,\theta} = UV^T$ can be obtained from the values of U,V. This solution minimizes the term $\sum_{i=1}^{K} \left( n_i - A_{r,\theta} n_i' \right)^2$.

Outliers can be eliminated using Random Sample Consensus (RANSAC) technique. RANSAC inliers threshold $\psi$ can be set for the relative angle $cos^{-1}$ ($\mathbf{n}_i^{\mathsf{T}} \hat{A}_{r,\theta} \, \boldsymbol{n'}_j$) to be half the angular resolution of the densely-sampled set $R_{3D}f$.

Upon extracting the rigid registration parameters T($x, y, z, \theta_x, \theta_y, \theta_z$), wherein ($x, y, z$) are translation parameters and ($\theta_x, \theta_y, \theta_z$) rotation parameters, the volume reconstruction unit uses the extracted parameters for aligning (607) 3D dense and sparse sinograms by applying the registration transformation thus found.

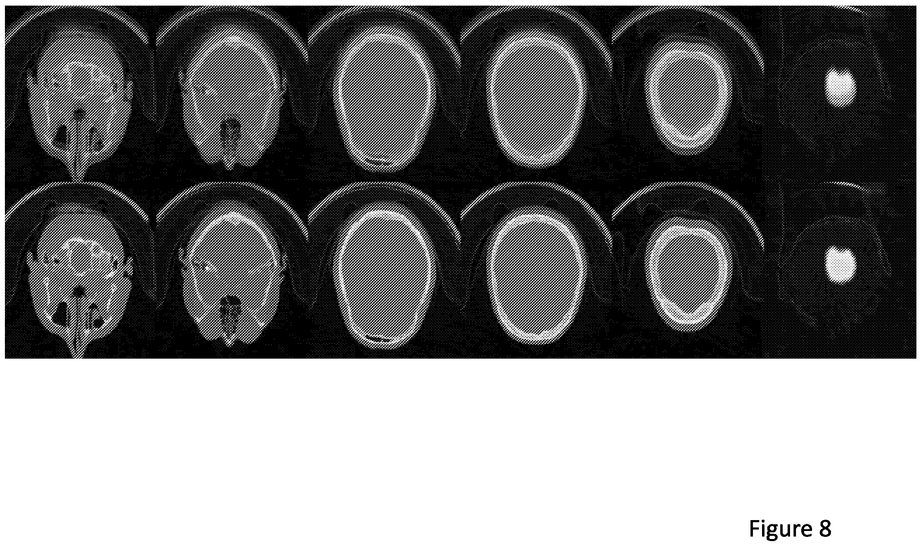

Likewise, the volume reconstruction unit can use the extracted parameters for aligning the dense and the sparse images. By way of non-limiting example, the dense image $f$ can be aligned with the sparse image g using forward image transformation. In such case the transformation T can be applied to each voxel of the image $f$, thereby obtaining a new image $f'$ = T$f$ that is aligned with the image g. By way of alternative non-limiting example, the sparse image g can be aligned with the dense image f by backward image transformation comprising applying to each voxel of the image g the inverse transform of T, T$^{-1}$ to obtain a new image $g'$ = T$^{-1}$ that is aligned with g. **Fig. 8** illustrates non-limiting examples of test results of registration provided in accordance with certain embodiments of the presently disclosed subject matter. The test was provided on a pair of CT scans from a patient's head taken at two different times. The voxel sizes of the CT scans are 0.42 $\times$ 0.42 $\times$ 0.67 mm$^3$. Prior to registration, scanning bed was removed from both images since the bed was not rigidly attached to the patient and its presence introduces errors in the Radon space signals. In practice, this can be done automatically, since the Radon transform of the bed without the patient is always the same and can be pre-computed and subtracted from the patient scan.

Results of image-based registration of the full-resolution scans are illustrated in the top line images of **Fig. 8,** and results of Radon space in accordance with presently disclosed embodiments are illustrated in the bottom line images of **Fig. 8.** Radon space registration has been provided using 18 angles. The root-mean-square error (RMSE) between the image space registration and the Radon space registration is 0.64mm. Thus, the results of registration provided in accordance with presently disclosed technique with about 10% of the radiation dose of the second scan are comparable to full-resolution image-space registration.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, a suitably programmed computer. Likewise, the invention contemplates a computer program being readable by a computer for executing the method of the invention. The invention further contemplates a machine-readable memory tangibly embodying a program of instructions executable by the machine for executing the method of the invention.

Those skilled in the art will readily appreciate that various modifications and changes can be applied to the embodiments of the invention as hereinbefore described without departing from its scope, defined in and by the appended claims.

## Claims

1. A method of computed tomography, CT, volume reconstruction based on a baseline sinogram obtained by a prior scanning an object in $B$ directions, the method comprising:

   a. obtaining initial partial sinogram by initial repeat scanning the object in $b$ directions out of $B$ directions, $b$ being substantially less than $B$;
   b. comparing the baseline sinogram and the initial partial sinogram to assess, for each voxel associated with the object, a likelihood of change;
   c. using the assessed likelihood of change for generating configuration data informative, at least, of rays to be cast in a further repeat scan in an un-scanned direction;
   d. performing a repeat scan in the un-scanned direction in accordance with the generated configuration data, thereby obtaining partial sinogram, and using the partial sinogram for updating the assessed likelihood of change;
   e. repeating operations c) and d) until all directions have been scanned to yield respective partial sinograms;
   f. composing the baseline and all partial sinograms into a composed sinogram; and
   g. processing the composed sinograms into an image of the object.

2. The method of Claim 1 further comprising aligning, prior to operation b), the baseline sinogram and the initial partial sinogram.

3. The method of Claim 2 wherein aligning is provided by rigid registration in three dimensional, 3D, Radon space.

4. The method of Claims 2 or 3, wherein the number $b$ of directions in the initial repeat scanning is selected so as to enable sufficient information for aligning the baseline sinogram and the initial partial sinogram.

5. The method of any one of Claims 1 - 4, wherein the number $b$ of directions in the initial repeat scanning is selected so as to enable sufficient information for assessing likelihood of change for the voxels.

6. The method of any one of Claims 1 - 5, further comprising generating a voxel change likelihood map presenting the assessed likelihood of change of corresponding voxels, wherein updating the assessed likelihood of change is provided by updating, following each repeat scan, the change likelihood map.

7. The method of any one of Claims 1 - 6, wherein the initial repeat scanning comprises scanning, in each slice, $n$ equally spaced directions.

8. The method of any one of Claims 1 - 7, wherein the number of rays cast when scanning in a given un-scanned direction is substantially lower than the number of rays casted when obtaining the baseline sinogram.

9. The method of any one of Claims 1 - 8, wherein assessing the likelihood comprises estimating, for each cast ray, probability that the ray has passed through a region constituted by changed voxels.

10. The method of Claim 9, wherein the probability is estimated using a noise difference model and/or rays difference model.

11. The method of Claims 9 or 10, wherein the probability is weighted in accordance with a risk-taking management policy.

12. A system of repeat computed tomography, CT, scanning comprising means for carrying out a method according to any one of Claims 1 - 11.

13. A simulator comprising means for simulating a method of repeat scan in accordance with any one of Claims 1 - 11.

14. A computer-based volume reconstruction unit configured to operate in conjunction with a CT scanner and comprising means for carrying out volume reconstruction in accordance with the method of any one of Claims 1 - 11.

15. A computer program product implemented on a non-transitory computer usable medium having computer readable program code embodied therein to cause the computer to perform the method of CT volume reconstruction in accordance with any one of Claims 1 - 11.

**Patentansprüche**

1. Verfahren einer Computertomografie- bzw. CT-Volumenrekonstruktion basierend auf einem Basislinien-Sinogramm, das durch ein vorheriges Abtasten eines Objekts in $B$ Richtungen erhalten wird, wobei das Verfahren Folgendes umfasst:

    a. Erhalten eines anfänglichen partiellen Sinogramms durch ein anfängliches wiederholtes Abtasten des Objekts in $b$ Richtungen aus $B$ Richtungen, wobei $b$ wesentlich geringer ist als $B$;
    b. Vergleichen des Basislinien-Sinogramms und des anfänglichen partiellen Sinogramms, um für jedes mit dem Objekt assoziierte Voxel eine Änderungswahrscheinlichkeit zu bestimmen;
    c. Verwenden der bestimmten Änderungswahrscheinlichkeit zum Erzeugen von Konfigurationsdaten, die über zumindest Strahlen informieren, die in einer weiteren wiederholten Abtastung in eine nicht abgetastete Richtung abgegeben werden sollen;
    d. Durchführen einer wiederholten Abtastung in die nicht abgetastete Richtung gemäß den erzeugten Konfigurationsdaten, wodurch ein partielles Sinogramm erhalten wird, und Verwenden des partiellen Sinogramms zum Aktualisieren der bestimmten Änderungswahrscheinlichkeit;

e. Wiederholen der Handlungen c) und d), bis alle Richtungen abgetastet worden sind, um jeweilige partielle Sinogramme zu ergeben;

f. Zusammensetzen der Basislinie und aller partiellen Sinogramme in ein zusammengesetztes Sinogramm und

g. Verarbeiten der zusammengesetzten Sinogramme in ein Bild des Objekts.

2. Verfahren nach Anspruch 1, ferner umfassend Ausrichten, vor der Handlung b), des Basislinien-Sinogramms und des anfänglichen partiellen Sinogramms.

3. Verfahren nach Anspruch 2, wobei das Ausrichten durch eine starre Registrierung im dreidimensionalen bzw. 3D-Radon-Raum bereitgestellt wird.

4. Verfahren nach Anspruch 2 oder 3, wobei die Anzahl *b* von Richtungen in der anfänglichen wiederholten Abtastung so ausgewählt wird, dass ausreichend Informationen zum Ausrichten des Basislinien-Sinogramms und des anfänglichen partiellen Sinogramms ermöglicht werden.

5. Verfahren nach einem der Ansprüche 1-4, wobei die Anzahl *b* von Richtungen in der anfänglichen wiederholten Abtastung so ausgewählt wird, dass ausreichend Informationen zum Bestimmen der Änderungswahrscheinlichkeit für die Voxel ermöglicht werden.

6. Verfahren nach einem der Ansprüche 1-5, ferner umfassend Erzeugen einer Voxel-Änderungswahrscheinlichkeitsabbildung, die die bestimmte Änderungswahrscheinlichkeit entsprechender Voxel darstellt, wobei das Aktualisieren der bestimmten Änderungswahrscheinlichkeit durch ein Aktualisieren, im Anschluss an jede wiederholte Abtastung, der Änderungswahrscheinlichkeitsabbildung bereitgestellt wird.

7. Verfahren nach einem der Ansprüche 1-6, wobei die anfängliche wiederholte Abtastung ein Abtasten, in jedem Schnitt, von *n* gleich beabstandeten Richtungen umfasst.

8. Verfahren nach einem der Ansprüche 1-7, wobei die Anzahl von Strahlen, die abgegeben werden, wenn in einer gegebenen nicht abgetasteten Richtung abgetastet wird, wesentlich geringer ist als die Anzahl von Strahlen, die abgegeben werden, wenn das Basislinien-Sinogramm erhalten wird.

9. Verfahren nach einem der Ansprüche 1-8, wobei das Bestimmen der Wahrscheinlichkeit ein Schätzen, für jeden abgegebenen Strahl, einer Wahrscheinlichkeit, dass der Strahl ein Gebiet, das aus geänderten Voxeln besteht, durchlaufen hat, umfasst.

10. Verfahren nach Anspruch 9, wobei die Wahrscheinlichkeit unter Verwendung eines Rauschdifferenzmodells und/oder Strahlendifferenzmodells geschätzt wird.

11. Verfahren nach Anspruch 9 oder 10, wobei die Wahrscheinlichkeit gemäß einer Risikonahme-Verwaltungsrichtlinie gewichtet wird.

12. System einer wiederholten Computertomografie- bzw. CT-Abtastung, umfassend Mittel zum Ausführen eines Verfahrens nach einem der Ansprüche 1-11.

13. Simulator, umfassend Mittel zum Simulieren eines Verfahrens einer wiederholten Abtastung gemäß einem der Ansprüche 1-11.

14. Computerbasierte Volumenrekonstruktionseinheit, die ausgelegt ist zum Arbeiten in Verbindung mit einem CT-Scanner, und umfassend Mittel zum Ausführen einer Volumenrekonstruktion gemäß dem Verfahren nach einem der Ansprüche 1-11.

15. Computerprogrammprodukt, das auf einem nichtflüchtigen computernutzbaren Medium mit einem darin umgesetzten computerlesbaren Programmcode implementiert ist, um zu bewirken, dass der Computer das Verfahren der CT-Volumenrekonstruktion gemäß einem der Ansprüche 1-11 durchführt.

**Revendications**

1. Procédé de reconstruction volumique d'une tomodensitométrie, CT, à partir d'un sinogramme de ligne de base obtenu par un balayage préalable d'un objet dans $B$ directions, le procédé comprenant :

   a. l'obtention d'un sinogramme partiel initial par une répétition de balayage initiale de l'objet dans $b$ directions des $B$ directions, $b$ étant essentiellement inférieur à $B$ ;
   b. la comparaison du sinogramme de ligne de base et du sinogramme partiel initial pour évaluer, pour chaque voxel associé à l'objet, une probabilité de modification ;
   c. l'utilisation de la probabilité de modification évaluée pour générer des données de configuration informatives, au moins, de rayons à projeter dans une répétition de balayage additionnelle dans une direction autre que celle du balayage
   d. l'exécution d'une répétition de balayage dans la direction autre que celle du balayage en fonction des données de configuration générées, pour ainsi obtenir un sinogramme partiel, et l'utilisation du sinogramme partiel pour la mise à jour de la probabilité de modification évaluée ;
   e. la répétition des opérations c) et d) jusqu'à ce que toutes les directions aient été balayées pour produire des sinogrammes partiels respectifs ;
   f. la composition de la ligne de base et de tous les sinogrammes partiels en un sinogramme composé ; et
   g. le traitement des sinogrammes composés en une image de l'objet.

2. Procédé selon la revendication 1, comprenant en outre l'alignement, avant l'opération b), du sinogramme de ligne de base et du sinogramme partiel initial.

3. Procédé selon la revendication 2, dans lequel l'alignement est réalisé par mise en registre rigide dans un espace de Radon tridimensionnel, 3D.

4. Procédé selon la revendication 2 ou 3, dans lequel le nombre $b$ de directions dans la répétition de balayage initiale est sélectionné de façon à offrir des informations suffisantes pour l'alignement du sinogramme de ligne de base et du sinogramme partiel initial.

5. Procédé selon l'une quelconque des revendications 1 à 4, dans lequel le nombre $b$ de directions dans la répétition de balayage initiale est sélectionné de façon à offrir des informations suffisantes pour l'évaluation d'une probabilité de modification pour les voxels.

6. Procédé selon l'une quelconque des revendications 1 à 5, comprenant en outre la génération d'une carte de probabilités de modification de voxels présentant la probabilité de modification évaluée des voxels correspondants, où la mise à jour de la probabilité de modification évaluée est réalisée par mise à jour, après chaque répétition de balayage, de la carte de probabilités de modification.

7. Procédé selon l'une quelconque des revendications 1 à 6, dans lequel la répétition de balayage initiale comprend le balayage, dans chaque tranche, dans $n$ directions espacées de manière égale.

8. Procédé selon l'une quelconque des revendications 1 à 7, dans lequel le nombre de rayons projetés lors du balayage dans une direction autre que celle du balayage donnée est essentiellement inférieur au nombre de rayons projetés lors de l'obtention du sinogramme de ligne de base.

9. Procédé selon l'une quelconque des revendications 1 à 8, dans lequel l'évaluation de la probabilité comprend l'estimation, pour chaque rayon projeté, de la probabilité que le rayon soit passé à travers une région constituée de voxels modifiés.

10. Procédé selon la revendication 9, dans lequel la probabilité est estimée à l'aide d'un modèle de différences de bruits et/ou d'un modèle de différences de rayons.

11. Procédé selon la revendication 9 ou 10, dans lequel la probabilité est pondérée en fonction de la politique de gestion de prise de risque.

12. Système de répétition de balayage de tomodensitométrie, CT, comprenant des moyens pour exécuter un procédé selon l'une quelconque des revendications 1 à 11.

13. Simulateur comprenant des moyens pour simuler un procédé de répétition de balayage selon l'une quelconque des revendications 1 à 11.

14. Unité de reconstruction volumique informatique configurée pour fonctionner conjointement avec un tomodensitomètre et comprenant des moyens pour l'exécution d'une reconstruction volumique selon le procédé selon l'une quelconque des revendications 1 à 11.

15. Produit de programme informatique mis en oeuvre sur un support non transitoire utilisable par ordinateur, contenant un code de programme lisible par ordinateur, pour faire en sorte que l'ordinateur exécute le procédé de reconstruction volumique CT selon l'une quelconque des revendications 1 à 11.

Figure 1

## Radon space

## Cartesian space

projection

$x'$

$x$

$x'$

ray path

object

$y'$

$y$

projection $\varphi$

$r$

## Radon transform

$$f(x,y) \longmapsto R_f(\varphi,r)$$

$$R_f(\varphi,r) := \int f(x,y)\, ds$$

$$\begin{pmatrix} x \\ y \end{pmatrix} \cdot \begin{pmatrix} \cos\varphi \\ \sin\varphi \end{pmatrix} = r$$

detector channels

201

202

Fig. 2

Obtaining baseline sinogram (301)

Obtaining initial partial sinogram by initial fractional scanning (302)

Aligning the baseline sinogram to the initial partial sinogram (303)

Comparing the baseline and initial partial sinograms, assessing likelihood of change for each voxel (304) and generating change likelihood map (305)

If left un-scanned direction? (306)

No

Yes

Using likelihood map for generating configuration data informative of parameters of further selective repeating scan in certain un-scanned direction (307)

Selective scanning in accordance with generated parameters, obtaining respective partial sinogram (308) and updating "change likelihood" map (309)

Compose the baseline and the partial sinograms into a resulting sinogram (310)

Processing the composed sinograms into an image (311)

Figure 3

Figure 4

Figure 5

```
┌─────────────────────────────────────┐     ┌─────────────────────────────────────┐
│ Obtaining 3D dense sinogram (601)    │     │ Obtaining 3D sparse sinogram (602)   │
└─────────────────────────────────────┘     └─────────────────────────────────────┘
```

Identifying for direction vectors from sparse sinogram respective best matching direction vector from dense sinogram (603)

Generating a set of matching projection pairs with relative displacements therebetween(604)

Constructing a set of linear equations corresponding to matching 1D signals (605)

Solving the set of linear equations and extracting rigid registration parameters (606)

Aligning 3D dense and sparse sinograms using the extracted parameters (607)

Figure 6

n$_i$ (703)

Similarity
(707)

n'$_j$ (704)

R$_{3D}$g(n$_i$,s)
(705)

R$_{3D}$f(n'$_j$,s)
(706)

Sparse sampling
(701)
(e.g. initial partial
scan)

Dense sampling
(702)
(e.g. baseline
scan)

Figure 7

EP 3 097 540 B1

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007009080 A, AL Alexander
- CN 101980302, J Ma
- CN 102737392, H Zhang
- CN 102063728, H Zhang
- US 2009219289 A, Kalvin A

### Non-patent literature cited in the description

- Low dose CT technique using prior image knowledge. **SAJID ABBAS et al.** Nuclear Science Symposium and Medical Imaging Conference (NSS/MIC). IEEE, 23 October 2011
- **MK KALRA ; MM MAHER ; TL TOTH ; LM HAMBERG ; MA BLAKE ; JA SHEPARD ; S SAINI.** Strategies for CT radiation dose optimization. *Radiology,* 2004, vol. 230 (3), 620-628
- **J SHTOK ; M ELAD ; M ZIBULEVSKY.** Learned shrinkage approach for low-dose reconstruction in computed tomography. *Int. Journal of Biomedical Imaging,* 2013, vol. 2013, 1-20
- **JW MOORE ; HH BARRETT ; LR FURENLID.** Adaptive CT for high-resolution, controlled-dose, region-of-interest imaging. *Proc. IEEE Nuclear Science Symposium,* 2009, 4154-4157
- **W XU ; K MUELLER.** Efficient low-dose CT artifact mitigation using an artifact-matched prior scan. *Medical Physics,* 2012, vol. 39, 47-48
- **W MAO ; T LI ; N WINK ; L XING.** CT image registration in sinogram space. *Medical Physics,* 2007, vol. 34, 35-96